(19) Europäisches Patentamt
European Patent Office
Office européen des brevets

(11) **EP 1 931 948 B1**

(12) **EUROPÄISCHE PATENTSCHRIFT**

(45) Veröffentlichungstag und Bekanntmachung des Hinweises auf die Patenterteilung:
**22.11.2017 Patentblatt 2017/47**

(21) Anmeldenummer: **06793318.4**

(22) Anmeldetag: **07.09.2006**

(51) Int Cl.:
***G01F 1/66*** (2006.01)

(86) Internationale Anmeldenummer:
**PCT/EP2006/066122**

(87) Internationale Veröffentlichungsnummer:
**WO 2007/039394 (12.04.2007 Gazette 2007/15)**

(54) **VORRICHTUNG ZUR BESTIMMUNG ODER ÜBERWACHUNG DES VOLUMEN- ODER MASSEDURCHFLUSSES EINES MEDIUMS DURCH EINE ROHRLEITUNG**

DEVICE FOR DETERMINING OR MONITORING A MEDIUM VOLUME OR MASS FLOW RATE IN A CONDUIT

DISPOSITIF POUR DETERMINER OU CONTROLER LE DEBIT VOLUMETRIQUE OU MASSIQUE D'UN FLUIDE DANS UNE CONDUITE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **05.10.2005 DE 102005047790**

(43) Veröffentlichungstag der Anmeldung:
**18.06.2008 Patentblatt 2008/25**

(73) Patentinhaber: **Endress+Hauser Flowtec AG**
**4153 Reinach (CH)**

(72) Erfinder:
• **BERGER, Andreas**
**CH-4106 Therwil (CH)**
• **BRUMBERG, Oliver**
**79618 Rheinfelden (DE)**
• **WIEST, Achim**
**79576 Weil Am Rhein (DE)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
**EP-A- 1 134 559        WO-A1-97/24585**
**DE-A1- 19 722 140      FR-A1- 2 781 047**
**US-A1- 4 103 551       US-A1- 2004 176 917**

**Beschreibung**

Die Erfindung betrifft eine Vorrichtung zur Bestimmung und/oder Über-wachung des Volumen- und/ oder Massedurchflusses eines Mediums, das eine Rohrleitung bzw. ein Messrohr mit einem Innendurchmesser Di in einer Strömungsrichtung S durchfließt, mit mehreren Ultraschallsensoren, die die Ultraschall-Messsignale entlang definierter Schallpfade in Strömungs-richtung des Mediums und entgegengesetzt zur Strömungsrichtung des Mediums aussenden und/oder empfangen, und mit einer Regel-/ Auswerteeinheit mit einer Sendestufe, einer Empfangsstufe und einer Auswertestufe.

Ultraschall-Durchflussmessgeräte werden vielfach in der Prozess- und Automatisierungstechnik zur Detektion des Volumen- und/oder Masse-durchflusses eines Mediums durch eine Rohrleitung eingesetzt. Bei dem Medium kann es sich um ein gasförmiges, dampfförmiges oder um ein flüssiges Medium handeln.

Im Hinblick auf die Montagemöglichkeiten gibt es zwei Typen von Ultraschall-Durchflussmessgeräten: Inline-Ultraschall-Durchflussmessgeräte, die üblicherweise über Flansche in die Rohrleitung montiert werden, und Clamp-On-Durchflussmessgeräte, die von außen auf der Rohrleitung aufgebracht werden und den Volumen- bzw. Massedurchfluss durch die Rohrwand hindurch - also nichtinvasiv - messen. Clamp-On-Durchflussmessgeräte sind beispielsweise in der EP 0 686 255 B1, der US-PS 4,484,478, DE 43 35 369 C1, DE 298 03 911 U1, DE 4336370 C1 oder der US-PS 4,598,593 beschrieben.

Hinsichtlich der Messmethoden lassen sich zwei Prinzipien unterscheiden: Durchflussmessgeräte, die den Durchfluss über die Laufzeitdifferenz von Ultraschall-Messsignalen in Strömungsrichtung und entgegen der Strömungs-richtung bestimmen, und Durchflussmessgeräte, die die Durchfluss-Information aus der Dopplerverschiebung der Ultraschall-Messsignale gewinnen. Im Falle von Ultraschall-Messgeräten, die nach der Laufzeit-differenzmethode arbeiten, werden die Ultraschall-Messsignale unter einem vorgegebenen Winkel über ein Koppelelement in die Rohrleitung, in der das Medium strömt, eingestrahlt bzw. aus der Rohrleitung ausgestrahlt. Hierbei sind die Ultraschallsensoren üblicherweise so angeordnet, dass die durch-laufenen Schallpfade durch den Zentralbereich der Rohrleitung bzw. des Messrohres geführt sind. Der ermittelte Durchflussmesswert spiegelt somit den mittleren Durchfluss des Mediums in der Rohrleitung.

Bei vielen Anwendungen, insbesondere bei Durchflussmessungen in Rohr-leitungen mit großen Nennweiten, ist diese einfache Mittelung jedoch zu ungenau. Alternativ ist es daher bekannt geworden, mehrere Paare von Ultraschallsensoren über den Umfang verteilt an dem Messrohr bzw. an der Rohrleitung vorzusehen, wodurch Durchflussinformation aus verschiedenen segmentierten Winkelbereichen des Messrohres bzw. der Rohrleitung zur Verfügung steht.

So offenbart die Schrift DE19722140A1 ein mehrkanaliges Ultraschall-Durchflussmessgerät, wobei ein Ultraschallsender ein Ultraschallsignal durch breite Abstrahlung an mehrere Ultraschallempfänger sendet, wobei Ultraschallempfänger bezüglich des Ultraschallsenders stromabwärts und stromaufwärts angeordnet sind, um Laufzeitmessungen in und gegen die Stromrichtung durchführen zu können.

Die wesentliche Komponente eines Ultraschallsensors ist ein piezoelek-trisches Element. Die wesentliche Komponente eines piezoelektrischen Elements ist eine piezokeramische, in zumindest einem Teilbereich metallisierte Schicht. Insbesondere handelt es sich bei der piezokeramischen Schicht um eine Folie oder um eine Membran. Durch Anlegen eines elektrischen Anregungssignals wird die piezokeramische Schicht in Schwingung versetzt und strahlt über ein Einkoppelelement ein Ultraschall-Messsignal mit einer definierten Signalform unter einem Einstrahlwinkel in die Rohrleitung. Das Empfangen des Ultraschall-Messsignals nach Durchlaufen der Rohrleitung erfolgt in umgekehrter Art und Weise.

Es versteht sich von selbst, dass die Fertigungskosten für ein mehrkanaliges Durchflussmessgerät erheblich über den Kosten für ein einkanaliges Durchflussmessgerät liegen.

Der Erfindung liegt die Aufgabe zugrunde, ein kostengünstiges mehrkanaliges Ultraschall-Durchflussmessgerät vorzuschlagen.

Die Aufgabe wird dadurch gelöst, dass zumindest ein Ultraschallsensor in einem ersten Bereich der Rohrleitung bzw. des Messrohres angeordnet ist, dass zumindest zwei Ultraschallsensoren in einem zweiten Bereich der Rohrleitung bzw. des Messrohres derart angeordnet sind, dass die Ultraschall-Messsignale die Rohrleitung oder das Messrohr in bzw. entgegengesetzt zur Strömungsrichtung des Messmediums auf Schallpfaden mit unterschiedlicher Länge durchlaufen, dass die Sendestufe den Ultraschallsensor bzw. die Ultraschallsensoren des ersten oder des zweiten Bereichs zeitgleich zur Aussendung der Ultraschall-Messsignale anregt, dass die Empfangsstufe die aufgrund der unterschiedlichen Länge der Schallpfade an den Ultraschall-sensoren des zweiten oder des ersten Bereichs zeitlich versetzt ankommenden Ultraschall-Messsignale detektiert und dass die Auswertestufe anhand der Laufzeitdifferenz der Ultraschall-Messsignale in Strömungs-richtung und entgegen der Strömungsrichtung auf den einzelnen Schallpfaden den Volumen- und/oder den Massedurchfluss des Mediums in der Rohrleitung bzw. in dem Messrohr ermittelt. Erfindungsgemäß wird also ein mehrkanaliges Ultraschall-Durchflussmessgerät mit paralleler Anregung von Ultraschall-Messsignalen vorgeschlagen, die das Messrohr bzw. die Rohrleitung auf unterschiedlichen Schallpfaden durchlaufen.

Gemäß einer vorteilhaften Weiterbildung der erfindungsgemäßen Vorrichtung ist vorgesehen, dass es sich im Fall der Verwendung eines Ultraschallsensors im ersten Bereich um einen Ultraschallsensor mit einer Abstrahlcharakteristik handelt, die so aufgefächert ist, dass die von dem Ultraschallsensor ausge-sendeten Ultraschall-Messsignale von den Ultraschallsensoren im zweiten Bereich empfangen werden.

Alternativ ist vorgesehen, dass es sich im Fall der Verwendung eines Ultraschallsensors im ersten Bereich um einen Ultraschallsensor handelt, bei dem eine Vielzahl von Sende-/Empfangseinheiten in einem Array angeordnet sind, die so ansteuerbar sind, dass sie gleichzeitig Ultraschall-Messsignale unter unterschiedlichen Einstrahlwinkeln in die Rohrleitung bzw. in das Messrohr aussenden, die nachfolgend von den Ultraschallsensoren im zweiten Bereich empfangen werden. Nachfolgend wird dann zwecks Laufzeitdifferenzmessung der Prozess umgekehrt.

Darüber hinaus wird vorgeschlagen, dass zumindest zwei Ultraschallsensoren in einer Einheit angeordnet sind, wobei die Einheit in einer Öffnung im ersten Bereich des Messrohres und/oder im zweiten Bereich des Messrohres montiert ist. Eine entsprechende Vorrichtung ist in der nicht vorveröffentlichten Patentanmeldung DE 102005003398.7 beschrieben. Der Inhalt dieser Patentanmeldung ist dem Offenbarungsgehalt der vorliegenden Patentanmeldung zuzurechnen.

Eine vorteilhafte Ausgestaltung der erfindungsgemäßen Vorrichtung schlägt für den Fall, dass mehrere Ultraschallsensoren im ersten Bereich der Rohrleitung bzw. des Messrohres vorhanden sind, vor, diese auf einer zur Längsachse der Rohrleitung bzw. des Messrohres parallelen Geraden anzuordnen.

Bevorzugt ist der Ultraschallsensor bzw. sind die Ultraschallsensoren im ersten Bereich der Rohrleitung bzw. des Messrohres derart positioniert, dass er bzw. dass sie die Ultraschall-Messsignale unter verschiedenen Abstrahlwinkeln in die Rohrleitung bzw. in das Messrohr abstrahlen.

Als besonders vorteilhaft wird die Ausgestaltung angesehen, dass zwei Ultraschallsensoren derart angeordnet oder ausgerichtet/angesteuert sind, dass sie die Ultraschall-Messsignale in radialer Richtung in die Rohrleitung einstrahlen und/oder aus der Rohrleitung empfangen, und dass die Regel-/Auswerteeinheit anhand der Laufzeit der Ultraschall-Messsignale auf dem diametralen Schallpfad die Schallgeschwindigkeit des Messmediums ermittelt.

Gemäß einer vorteilhaften Ausgestaltung der erfindungsgemäßen Vorrichtung liegen die Ultraschallsensoren in einer Ebene; die Ultraschall-Messsignale werden simultan unter unterschiedlichen Einstrahlwinkeln in die Rohrleitung eingestrahlt und/oder aus der Rohrleitung empfangen.

Bevorzugt liegen die Ultraschallsensoren in einer Ebene, wodurch eine Messung des Strömungsprofils des Mediums in der Rohrleitung näherungs-weise zeitgleich möglich ist. Außerdem wird von dem erfindungsgemäßen Durchflussmessgerät eine präzisere Information als bei herkömmlich sequenziell arbeitenden Durchflussmessgeräten bereitgestellt. Dies gilt selbst im Falle von sehr unterschiedlichen Strömungsverhältnissen in der Rohrleitung.

Eine vorteilhafte Weiterbildung, insbesondere im Falle von Ultraschall-Durchflussmessgeräten mit kleinen Nennweiten, ist darin zu sehen, dass jedem Ultraschallsensor ein eigener Empfangsverstärker zugeordnet. Insbesondere bei Ultraschall-Durchflussmessgeräten mit kleinen Nennweiten ist die Laufzeit der Messsignale klein im Vergleich zur Nachschwingzeit des Ultraschallsensors, so dass die Messperformance erheblich verbessert wird, wenn die Ultraschall-Messsignale erst nach der Verstärkung zusammen-gefasst werden.

Die Erfindung wird anhand der nachfolgenden Zeichnungen näher erläutert. Es zeigt:

Fig. 1: eine schematische Darstellung einer ersten Ausgestaltung des erfindungsgemäßen Ultraschall-Aufnehmers,

Fig. 2: eine schematische Darstellung einer dritten Ausgestaltung des erfindungsgemäßen Ultraschall-Aufnehmers.

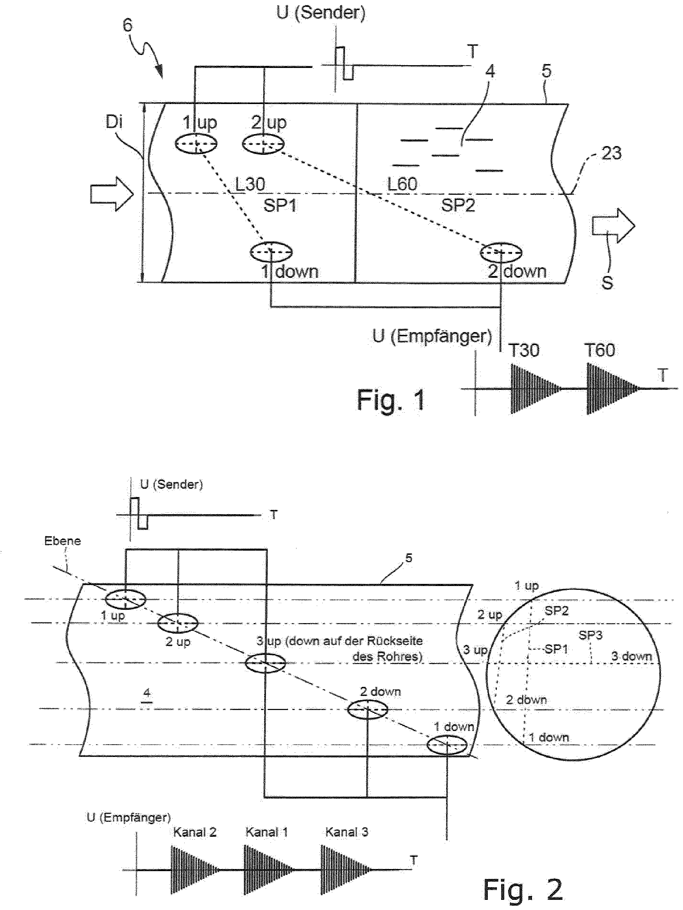

Bevor die Figuren näher erläutert werden, folgen einige allgemeine Anmerkungen: Mehrkanalige Ultraschall-Durchflussmessgeräte, die nach dem Laufzeitdifferenz-Verfahren arbeiten, basieren auf einem Vergleich der Laufzeit $t_{up}$ in Strömungsrichtung S und der Laufzeit $t_{dn}$ entgegen der Strömungsrichtung S. Weiter spielt der Innendurchmesser Di über die Fläche A der Rohrleitung 5 bzw. des Messrohres 5 eine Rolle. Ebenso ist der Winkel $\alpha$ - in der Figur Fig. 1 beträgt der Einstrahl- bzw. Ausstrahlwinkel $\alpha$ = 30° bzw. $\alpha$ = 60° - des Schallstrahles zum Durchfluss Q und die Länge L30 bzw. L60 des Schallpfades SP in dem mit der Geschwindigkeit v strömenden Medium 4 zu berücksichtigen. Der Korrekturfaktor k ist vom relativen radialen Abstand rA des Schallstrahls zur Mitte der Rohrleitung 5 bzw. des Messrohrs 5 abhängig.

Mathematisch beschreiben lässt sich der Durchfluss Q durch die folgende Gleichung:

$$Q = k * A * v = k * \frac{\pi}{4} * Di^2 * L * \frac{t_{up} - t_{dn}}{(t_{up} * t_{dn}) * 2 * \cos\alpha} \qquad (1)$$

$$L = \frac{1}{\cos\alpha} Di * \sqrt{1 - rA^2} \qquad (2)$$

Für die Berechnung des Durchflusses Q ist es bei bekanntem Winkel $\alpha$ in erster Näherung egal, ob mit einem Winkel $\alpha$ von 30° oder 60° zur Strömungsrichtung S des Mediums 4 eingestrahlt bzw. ausgestrahlt wird. Der Korrekturfaktor k des Verhältnisses von gemessener Geschwindigkeit v auf dem Schallpfad SP zur mittleren Geschwindigkeit über den Querschnitt A der Rohrleitung 5 ändert sich dabei nicht. Um z.B. mit zwei Schallstrahlen, wie beim PROline Prosonic Flow 93 C - Inline - ein Gerät das von der Anmelderin angeboten und vertrieben wird - zu messen, ist es möglich, ein Sensorpaar (1up, 1dn) mit 30° und das andere Sensorpaar (2up, 2dn) mit 60° zur Strömungsrichtung S zu montieren. Der Korrekturfaktor k ist bei einem turbulenten Strömungsprofil und einem radialen Abstand der Ultraschallsensoren von 52 % näherungsweise 1. Für den Schallpfad mit $\alpha$ = 30° bzw. $\alpha$ = 60° benötigen die Ultraschall-Messsignale bei einem Innendurchmesser Di der Rohrleitung 5 von z.B. 1000 mm somit:

$$L_{30} = \frac{1}{\cos(30°)} * 1000mm * \sqrt{1 - 0.52^2} = 986mm \qquad (3)$$

bzw.

$$L_{60} = \frac{1}{\cos(60°)} * 1000mm * \sqrt{1 - 0.52^2} = 1708mm \qquad (4)$$

Bei einer Schallgeschwindigkeit $c_M$ von z.B. 1500 m/s bei dem Medium 4 'Wasser' beträgt die Laufzeit T der Ultraschall-Messsignale in der Rohrleitung 5:

$$T_{30} = \frac{L_{30}}{c} = \frac{0.986m}{1500m/s} = 657\mu\sec \qquad (5)$$

bzw.

$$T_{60} = \frac{L_{60}}{c} = \frac{1.708m}{1500m/s} = 1139\mu\sec \qquad (6)$$

Ein Ultraschall-Messsignal erreicht bei einer Erregerfrequenz von 1 MHz eine typische Abklingzeit von ca. 100$\mu$sec bzw. ca. 1‰ des Maximums. Bei spezieller Anpassung bzw. Erregung der Ultraschallsensoren 1up, 2up, 3up; 1dn, 2dn, 3dn sind auch noch wesentlich kürzere Abklingzeiten erreichbar. Der Hauptgedanke der erfindungsgemäßen Lösung besteht darin, ein Array oder zumindest zwei sendende Ultraschallsensoren 8; 1up, 2up über eine Parallelschaltung mit einem Sendeimpuls U(t) anzuregen.

Diese sendenden Ultraschallsensoren 8; 1up, 2up befinden sich z.B. an der Rohrleitung 5 in Richtung des Einlasses, während die empfangenden Ultraschallsensoren 1dn, 2dn; 8 in Richtung des Auslasses der Rohrleitung 5 angeordnet sind. Die Empfangssignale der beiden Ultraschallsensoren 1dn, 2dn; 8 werden parallel auf einen Summenverstärker 11 geleitet.

Da die Dauer des Empfangssignals klein ist im Vergleich zu dem zeitlichen Abstand der beiden Laufzeiten

$$T_{30} - T_{60} = 482\ \mu sec, \qquad (7)$$

lassen sich die unterschiedlichen Schallpfade SP bei 30° und 60° sehr gut über Ihre Laufzeiten T30, T60 unterschieden. Somit ist es möglich, mit einer Sendestufe 10, die parallel auf alle sendenden Ultraschallsensoren 1up, 2up, 3up, 8 wirkt, und mit einer Empfangsstufe 11, die die Summe aller Ultraschall-Messsignale der empfangenden Ultraschallsensoren 1dn, 2dn, 3dn; 8 bildet, zu arbeiten. Über eine entsprechende Auswertung können die Zeiten $t_{up30}$ bzw. $t_{up60}$ für die entsprechenden Schallpfade SP in einfacher Weise dadurch ermittelt werden, dass mit Zeitfenstern gearbeitet wird, die für einen bestimmten, winkelabhängigen Schallpfad SP und für eine bestimmte Schall-geschwindigkeit errechnet sind.

Beispielsweise liegen die Zeitfenster zwischen 600...700 $\mu$sec und zwischen 1100...1200$\mu$sec.

Das vorgenannte Beispiel bezieht sich auf zwei Paare von Ultraschall-sensoren 1up, 2up; 1dn, 2dn. Selbstverständlich ist es auch möglich, die Anzahl der Paare von Ultraschallsensoren 1up, 2up; 1dn, 2dn zu erhöhen. Dabei ist zu beachten, dass die Abklingzeit stets kleiner ist als zeitliche Abstand der Laufzeiten ist, die in Gleichung 7 beispielhaft aufgeführt sind.

Weiterhin ist vorgesehen, dass ein Schallpfad SP das Medium 4 senkrecht zur Strömungsrichtung S quert. Über die Laufzeit der Ultraschall-Messsignale auf diesem senkrechten Schallpfad SP lässt sich die aktuelle Schallgeschwindig-keit $c_M$ des Mediums 4 exakt bestimmen und bei der genauen Berechnung des Volumen- bzw. Massedurchflusses des Mediums 4 durch die Rohrleitung 5 berücksichtigen.

Nachfolgend werden die Figuren Fig. 1 und Fig. 2 im Detail beschrieben. Fig. 1 zeigt eine schematische Darstellung einer ersten Ausgestaltung des erfindungsgemäßen Ultraschall-Aufnehmers 6, wobei sich ein Ultraschall-Durchflussmessgerät aus einem Aufnehmer 6 bzw. Sensor und einem sog. Transmitter 7, der den Elektronikteil umfasst, zusammensetzt. Der Aufnehmer 6 hat zwei Ultraschallsensoren 1up, 2up, die in Richtung des Einlasses der Rohrleitung 5 angeordnet sind, und zwei Ultraschallsensoren 1dn, 2dn, die in Richtung des Auslasses der Rohrleitung 5 positioniert sind. Die beiden Ultraschallsensoren 1up, 2up werden parallel mit einem Sendeimpuls U(t) beaufschlagt. Aufgrund der unterschiedlichen Laufzeiten T30, T60 auf den beiden die Rohrleitung 5 querenden Schallpfaden SP1 , SP2 mit den Längen L30, L60 werden die entsprechenden Ultraschall-Messsignale von den beiden Ultraschallsensoren 1dn, 2dn zeitlich versetzt detektiert. Analog erfolgt die Aussenden und das Empfangen der Ultraschall-Messsignale in der umgekehrten Richtung, also entgegen der Strömungsrichtung S.

Fig. 2 zeigt eine schematische Darstellung einer dritten Ausgestaltung des erfindungsgemäßen Ultraschall-Aufnehmers 6.

Das in der Figur Fig. 2 beschriebene Ultraschall-Durchfluss-messgerät weist drei Ultraschallsensoren 1up, 2up, 3up auf, die in Richtung des Einlasses der Rohrleitung 5 angeordnet sind, und drei Ultraschall-sensoren 1dn, 2dn, 3dn, die in Richtung des Auslasses der Rohrleitung 5 positioniert sind. Die Anordnung der Ultraschallsensoren 1up, 2up, 3up; 1dn, 2dn, 3dn ist so gewählt, dass diese in einer Ebene liegen. Der Verlauf der entsprechenden Schallpfade SP1, Sp2, Sp3 ist in der Fig. 2 gleichfalls zeichnerisch dargestellt. Aufgrund der unterschiedlichen Laufzeiten auf den einzelnen Schallpfaden SP1, SP2, SP3 werden die Ultraschall-Messsignale von den Ultraschallsensoren 1dn, 2dn, 3dn zeitversetzt detektiert.. Infolge der parallelen Abfrage anstelle der sequentiellen Abfrage der Ultraschallsensoren 1up, 2up, 3up; 1dn, 2dn, 3dn, lassen sich selbst schnell aufeinanderfolgende Ultraschall-Messsignale an den als Empfängern agierenden Ultraschallsensoren 1dn, 2dn, 3dn bzw. im umgekehrten Fall 1 up, 2up, 3up mit der hinreichenden Genauigkeit detektieren.

**Bezugszeichenliste**

| | |
|---|---|
| 1 | Ultraschallsensor (up, down) |
| 2 | Ultraschallsensor (up, down) |
| 3 | Ultraschallsensor (up, down) |
| 4 | Medium |
| 5 | Rohrleitung bzw. Messrohr |
| 6 | Messaufnehmer |
| 7 | Transmitter |
| 10 | Sendestufe |
| 23 | Längsachse |

**Patentansprüche**

1. Vorrichtung zur Bestimmung und/oder Überwachung des Volumen- und/ oder Massedurchflusses eines Mediums (4), das eine Rohrleitung (5) bzw. ein Messrohr (5) mit einem Innendurchmesser (Di) in einer Strömungsrichtung (S) durchfließt, mit mehreren Ultraschallsensoren (1up, 2up, 3up; 1dn, 2dn, 3dn), die die Ultraschall-Messsignale entlang definierter Schallpfade (SP) in Strömungsrichtung (S) des Mediums (4) und entgegengesetzt zur Strömungsrichtung (S) des Mediums (4) aussenden und empfangen, und mit einer Regel-/Auswerteeinheit (7) mit einer Sendestufe (10), einer Empfangsstufe (11) und einer Auswertestufe (12),
wobei zumindest ein Ultraschallsensor (1up, 2up, 3up; 8) in einem ersten Bereich der Rohrleitung (5) bzw. des Messrohres (5) angeordnet ist,
wobei zumindest zwei Ultraschallsensoren (1dn, 2dn, 3dn) in einem zweiten Bereich der Rohrleitung (5) bzw. des Messrohres (5) derart angeordnet sind, dass die Ultraschall-Messsignale die Rohrleitung (5) oder das Messrohr (5) in bzw. entgegengesetzt zur Strömungsrichtung (S) des Mediums (4) auf Schallpfaden (SP) mit unterschiedlicher Länge (L) durchlaufen,

**dadurch gekennzeichnet, dass**

die Sendestufe (10) den Ultraschallsensor (8) bzw. die Ultraschall-sensoren (1up, 2up, 3up) des ersten Bereichs parallel ansteuernd zeitgleich zur Aussendung der Ultraschall-Messsignale anregt,

wobei die Empfangsstufe (11) die aufgrund der unterschiedlichen Länge (L) der Schallpfade (SP) an den parallel geschalteten Ultraschallsensoren (1dn, 2dn, 3dn) des zweiten Bereichs zeitlich versetzt ankommenden Ultraschall-Messsignale detektiert und

wobei nachfolgend die Sendestufe (10) die Ultraschallsensoren (1dn, 2dn, 3dn) des zweiten Bereichs parallel ansteuernd zeitgleich zur Aussendung der Ultraschall-Messsignale anregt,

wobei die Empfangsstufe (11) die aufgrund der unterschiedlichen Länge (L) der Schallpfade (SP) an den parallel geschalteten Ultraschallsensoren (1up, 2up, 3up) des ersten Bereichs zeitlich versetzt ankommenden Ultraschall-Messsignale detektiert

und wobei die Auswertestufe (12) anhand der Laufzeitdifferenz der Ultraschall-Messsignale in Strömungsrichtung (S) und entgegen der Strömungsrichtung (S) auf den einzelnen Schallpfaden (SP) den Volumen- und/oder den Massedurchfluss des Mediums (4) in der Rohrleitung (5) bzw. in dem Messrohr (5) ermittelt.

2. Vorrichtung nach Anspruch 1,

**dadurch gekennzeichnet,**

wobei es sich im Fall der Verwendung eines Ultraschallsensors (8) im ersten Bereich um einen Ultraschallsensor (8) mit einer Abstrahlcharakteristik handelt, die so aufgefächert ist, dass die von dem Ultraschallsensor (8) ausgesendeten Ultraschallsignale von den Ultraschallsensoren (1dn, 2dn, 3dn) im zweiten Bereich empfangen werden.

3. Vorrichtung nach Anspruch 1,

**dadurch gekennzeichnet,**

wobei es sich im Fall der Verwendung eines Ultraschallsensors (8) im ersten Bereich um einen Ultraschallsensor (8) handelt, bei dem eine Vielzahl von Sende-/Empfangseinheiten in einem Array angeordnet sind, die so ansteuerbar sind, dass sie gleichzeitig Ultraschall-Messsignale unter unterschiedlichen Einstrahlwinkeln ($\alpha$) in die Rohrleitung (5) bzw. in das Messrohr (5) aussenden, die von den Ultraschallsensoren im zweiten Bereich (1dn, 2dn, 3dn) empfangen werden.

4. Vorrichtung nach Anspruch 1,

**dadurch gekennzeichnet,**

**dass** zumindest zwei Ultraschallsensoren (1up, 2up, 3up; 1dn, 2dn, 3dn) in einer Einheit angeordnet sind, wobei die Einheit in einer Öffnung im ersten Bereich des Messrohres (5) und/oder im zweiten Bereich des Messrohres (5) montiert ist.

5. Vorrichtung nach Anspruch 1, 2, oder 4,

**dadurch gekennzeichnet,**

wobei für den Fall, dass mehrere Ultraschallsensoren (1up, 2up, 3up) im ersten Bereich der Rohrleitung (5) bzw. des Messrohres (5) vorgesehen sind, diese auf einer zur Längsachse (23) der Rohrleitung (5) bzw. des Messrohres (5) parallelen Geraden angeordnet sind.

6. Vorrichtung nach Anspruch 1, 2, 3 oder 4,

**dadurch gekennzeichnet,**

**dass** der Ultraschallsensor (8) bzw. die Ultraschallsensoren (1up, 2up, 3up) im ersten Bereich der Rohrleitung (5) bzw. des Messrohres (5) derart positioniert sind, dass sie die Ultraschall-Messsignale unter verschiedenen Einstrahlwinkeln ($\alpha$) in die Rohrleitung (5) bzw. in das Messrohr (5) einstrahlen.

7. Vorrichtung nach Anspruch 1 oder 6,

**dadurch gekennzeichnet,**

wobei zwei Ultraschallsensoren (1up, 1dn) derart angeordnet oder ausgerichtet/angesteuert sind, dass sie die Ultraschall-Messsignale in radialer Richtung in die Rohrleitung (5) bzw. in das Messrohr (5) einstrahlen und/oder aus der Rohrleitung (5) bzw. aus der Rohrleitung (5) empfangen, und

wobei die Regel-/Auswerteeinheit (7) anhand der Laufzeit (Td) der Ultraschall-Messsignale auf dem diametralen Schallpfad (SPd) die Schallgeschwindigkeit ($c_M$) des Mediums (4) ermittelt.

**8.** Vorrichtung nach Anspruch 1,
**dadurch gekennzeichnet,**
**dass** die Ultraschallsensoren in einer Ebene liegen und simultan unter unterschiedlichen Einstrahlwinkeln die Ultraschall-Messsignale in die Rohrleitung einstrahlen und/oder aus der Rohrleitung empfangen.

**9.** Vorrichtung nach Anspruch 1 oder 2,
**dadurch gekennzeichnet,**
**dass** die Ultraschallsensoren (1up, 2up, 3up; 1dn, 2dn, 3dn) in einer Ebene liegen, wodurch eine Messung des Strömungsprofils des Mediums (4) in der Rohrleitung (5) bzw. in dem Messrohr (5) näherungsweise zeitgleich erfolgt.

**10.** Vorrichtung nach Anspruch 1 oder 9,
**dadurch gekennzeichnet,**
**dass** jedem Ultraschallsensor (1up, 2up, 3up; 1dn, 2dn, 3dn) ein Empfangsverstärker (11a, 11b, 11c) zugeordnet ist.

**Claims**

**1.** Apparatus for determining and/or monitoring the volume flow and/or the mass flow of a medium (4) flowing through a pipe (5) or a measuring tube (5) with an internal diameter (Di) in a flow direction (S), with multiple ultrasonic sensors (1up, 2up, 3up ; 1dn, 2dn, 3dn), which send and receive the ultrasonic measuring signals along defined sound paths (SP) in the flow direction (S) of the medium (4) and against the flow direction (S) of the medium (4), and with a control/evaluation unit (7) with a transmission stage (10), a reception stage (11) and an evaluation stage (12),
wherein at least one ultrasonic sensor (1up, 2up, 3up ; 8) is arranged in a first section of the pipe (5) or measuring tube (5),
wherein at least two ultrasonic sensors (1dn, 2dn, 3dn) are arranged in a second section of the pipe (5) or measuring tube (5) in such a way that the ultrasonic measuring signals pass through the pipe (5) or the measuring tube (5) in or against the flow direction (S) of the medium (4) on sound paths (SP) of different lengths (L),
**characterized in that**
the transmission stage (10) simultaneously excites the ultrasonic sensor (8) or ultrasonic sensors (1up, 2up, 3up) of the first section in parallel to transmit the ultrasonic measuring signals,
wherein the reception stage (11) detects the ultrasonic measuring signals which arrive at different times at the ultrasonic sensors (1dn, 2dn, 3dn) - which are switched in parallel - of the second section due to the different length (L) of the sound paths (SP), and
wherein the transmission stage (10) then simultaneously excites the ultrasonic sensors (1dn, 2dn, 3dn) of the second section in parallel to transmit the ultrasonic measuring signals,
wherein the reception stage (11) detects the ultrasonic measuring signals which arrive at different times at the ultrasonic sensors (1up, 2up, 3up) - which are switched in parallel - of the first section due to the different length (L) of the sound paths (SP),
and wherein the evaluation stage (12) determines the volume flow and/or the mass flow of the medium (4) in the pipe (5) or measuring tube (5) based on the transit time difference of the ultrasonic measuring signals in the flow direction (S) and against the flow direction (S) on the individual sound paths (SP).

**2.** Apparatus as claimed in Claim 1,
**characterized in that**
if an ultrasonic sensor (8) is used in the first section, this is an ultrasonic sensor (8) with a directivity such that the ultrasonic signals transmitted by the ultrasonic sensor (8) are received by the ultrasonic sensors (1dn, 2dn, 3dn) in the second section.

**3.** Apparatus as claimed in Claim 1,
**characterized in that**
if an ultrasonic sensor (8) is used in the first section, this is an ultrasonic sensor (8) where numerous transmission/reception units are arranged in an array and can be controlled in such a way that they simultaneously transmit ultrasonic measuring signals, at different angles of incidence ($\alpha$), into the pipe (5) or into the measuring tube (5), which are received by the ultrasonic sensors (1dn, 2dn, 3dn) in the second section.

**4.** Apparatus as claimed in Claim 1,
**characterized in that**
at least two ultrasonic sensors (1up, 2up, 3up ; 1dn, 2dn, 3dn) are arranged in a unit, wherein the unit is mounted in an opening in the first section of the measuring tube (5) and/or in the second section of the measuring tube (5).

5. Apparatus as claimed in Claim 1, 2 or 4
   **characterized in that**
   if several ultrasonic sensors (1up, 2up, 3up) are provided in the first section of the pipe (5) or measuring tube (5), they are arranged on a straight which is parallel to the longitudinal axis (23) of the pipe (5) or measuring tube (5).

6. Apparatus as claimed in Claim 1, 2, 3 or 4
   **characterized in that**
   the ultrasonic sensor (8) or the ultrasonic sensors (1up, 2up, 3up) are positioned in the first section of the pipe (5) or measuring tube (5) in such a way that they radiate the ultrasonic measuring signals into the pipe (5) or measuring tube (5) at different angles of incidence ($\alpha$).

7. Apparatus as claimed in Claim 1 or 6
   **characterized in that**
   two ultrasonic sensors (1up, 1dn) are arranged or aligned/controlled in such a way that they radiate the ultrasonic measuring signals into the pipe (5) or measuring tube (5) and/or receive the ultrasonic measuring signals from the pipe (5) or measuring tube (5) in a radial direction, and wherein the control/evaluation unit (7) determines the sound velocity ($c_M$) of the medium (4) on the basis of the transit time (Td) of the ultrasonic measuring signals on the diametric sound path (SPd).

8. Apparatus as claimed in Claim 1
   **characterized in that**
   the ultrasonic sensors are arranged on a plane and radiate the ultrasonic measuring signals into and/or out of the pipe simultaneously at different angles of incidence.

9. Apparatus as claimed in Claim 1 or 2
   **characterized in that**
   the ultrasonic sensors (1up, 2up, 3up ; 1dn, 2dn, 3dn) are arranged on a plane as a result of which the flow profile of the medium (4) in the pipe (5) or in the measuring tube (5) is measured approximately simultaneously.

10. Apparatus as claimed in Claim 1 or 9
    **characterized in that**
    a receiving amplifier (11a, 11b, 11c) is assigned to every ultrasonic sensor (1up, 2up, 3up ; 1dn, 2dn, 3dn).

**Revendications**

1. Dispositif destiné à la détermination et/ou la surveillance du débit volumique et/ou massique d'un produit (4) s'écoulant dans une conduite (5) ou dans un tube de mesure (5) d'un diamètre intérieur (Di) dans un sens d'écoulement (S), lequel dispositif comprend plusieurs capteurs à ultrasons (1up, 2up, 3up ; 1dn, 2dn, 3dn), qui émettent et reçoivent les signaux de mesure ultrasonores le long de chemins ultrasonores (SP) définis dans le sens d'écoulement (S) du produit (4) et dans le sens contraire au sens d'écoulement (S) du produit (4), et avec une unité de régulation / d'exploitation (7) comportant un étage d'émission (10), un étage de réception (11) et un étage d'exploitation (12), pour lequel au moins un capteur à ultrasons (1up, 2up, 3up ; 8) est disposé dans une première zone de la conduite (5) ou du tube de mesure (5), pour lequel au moins deux capteurs à ultrasons (1dn, 2dn, 3dn) sont disposés dans une deuxième zone de la conduite (5) ou du tube de mesure (5), de telle sorte que les signaux de mesure ultrasonores traversent la conduite (5) ou le tube de mesure (5) dans le sens d'écoulement (S) ou dans le sens contraire du sens d'écoulement (S) du produit (4) sur des chemins acoustiques (SP) de longueur (L) différente,
   **caractérisé**
   **en ce que** l'étage d'émission (10) excite en parallèle le capteur à ultrasons (8) ou les capteurs à ultrasons (1up, 2up, 3up) de la première zone, en même temps que l'émission des signaux de mesure ultrasonores,
   l'étage de réception (11) détectant les signaux de mesure ultrasonores arrivant de façon décalée dans le temps - en raison de la longueur (L) différente des chemins acoustiques (SP) - aux capteurs à ultrasons (1dn, 2dn, 3dn) commandés en parallèle de la deuxième zone, et
   l'étage d'émission (10) excitant ensuite en parallèle les capteurs à ultrasons (1dn, 2dn, 3dn) de la deuxième zone, en même temps que l'émission des signaux de mesure ultrasonores,

l'étage de réception (11) détectant les signaux de mesure ultrasonores arrivant de façon décalée dans le temps - en raison de la longueur (L) différente des chemins acoustiques (SP) - aux capteurs à ultrasons (1up, 2up, 3up) commandés en parallèle de la première zone,
et l'étage d'exploitation (12) déterminant au moyen de la différence de temps de propagation des signaux de mesure ultrasonores dans le sens d'écoulement (S) et dans le sens contraire du sens d'écoulement (S) sur les différents chemins acoustiques (SP) le débit volumique et/ou massique du produit (4) dans la conduite (5) ou dans le tube de mesure (5).

**2.** Dispositif selon la revendication 1,
**caractérisé**
**en ce que** il s'agit, en cas d'utilisation d'un capteur à ultrasons (8) dans la première zone, d'un capteur à ultrasons (8) doté d'une caractéristique de rayonnement, qui est définie de telle sorte que les signaux ultrasonores émis par le capteur à ultrasons (8) sont reçus par les capteurs à ultrasons (1dn, 2dn, 3dn) disposés dans la deuxième zone.

**3.** Dispositif selon la revendication 1,
**caractérisé**
**en ce que** il s'agit, en cas d'utilisation d'un capteur à ultrasons (8) dans la première zone, d'un capteur à ultrasons (8) pour lequel un grand nombre d'unités d'émission / de réception sont disposées dans un réseau, lesquelles unités peuvent être commandées de telle sorte que les signaux de mesure ultrasonores émettent selon différents angles d'incidence (α) dans la conduite (5) ou dans le tube de mesure (5), signaux qui sont reçus par les capteurs à ultrasons (1dn, 2dn, 3dn) disposés dans la deuxième zone.

**4.** Dispositif selon la revendication 1,
**caractérisé**
**en ce qu'**au moins deux capteurs à ultrasons (1up, 2up, 3up ; 1dn, 2dn, 3dn) sont disposés dans une unité, l'unité étant montée dans une ouverture dans la première zone du tube de mesure (5) et/ou dans la deuxième zone du tube de mesure (5).

**5.** Dispositif selon la revendication 1, 2 ou 4,
**caractérisé**
**en ce que**, pour le cas où plusieurs capteurs à ultrasons (1up, 2up, 3up) sont prévus dans la première zone de la conduite (5) ou du tube de mesure (5), ceux-ci sont disposés sur une droite parallèle à l'axe longitudinal (23) de la conduite (5) ou du tube de mesure (5).

**6.** Dispositif selon la revendication 1, 2, 3 ou 4,
**caractérisé**
**en ce que** le capteur à ultrasons (8) ou les capteurs à ultrasons (1up, 2up, 3up) sont positionnés dans une première zone de la conduite (5) ou du tube de mesure (5) de telle sorte qu'ils émettent les signaux de mesure ultrasonores selon différents angles d'incidence (α) dans la conduite (5) ou dans le tube de mesure (5).

**7.** Dispositif selon la revendication 1 ou 6,
**caractérisé**
**en ce que** deux capteurs à ultrasons (1up, 1dn) sont disposés ou alignés / commandés de telle sorte à émettre les signaux de mesure ultrasonores dans la conduite (5) ou dans le tube de mesure (5) et/ou à les recevoir depuis la conduite (5) ou depuis le tube de mesure (5) dans une direction radiale, et dispositif pour lequel l'unité de régulation / d'exploitation (7) détermine sur la base du temps de propagation (Td) des signaux de mesure ultrasonores sur le chemin ultrasonore diamétral (SPd) la célérité acoustique ($c_M$) du produit (4).

**8.** Dispositif selon la revendication 1,
**caractérisé**
**en ce que** les capteurs à ultrasons sont disposés dans un plan, et émettent dans la conduite et/ou reçoivent depuis la conduite, simultanément et selon différents angles d'incidence, les signaux de mesure ultrasonores.

**9.** Dispositif selon la revendication 1 ou 2,
**caractérisé**
**en ce que** les capteurs à ultrasons (1up, 2up, 3up ; 1dn, 2dn, 3dn) se situent dans un plan, ce qui permet une mesure quasi simultanée du profil d'écoulement du produit (4) dans la conduite (5) ou dans le tube de mesure (5).

**10.** Dispositif selon la revendication 1 ou 9,
**caractérisé**
**en ce qu'**à chaque capteur à ultrasons (1up, 2up, 3up ; 1dn, 2dn, 3dn) est attribué un amplificateur de réception (11a, 11b, 11c).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0686255 B1
- US 4484478 A
- DE 4335369 C1
- DE 29803911 U1
- DE 4336370 C1
- US 4598593 A
- DE 19722140 A1
- DE 102005003398